# DEMANDE DE BREVET EUROPEEN

(11) **EP 1 804 381 A2**
(43) Date de publication de la demande: **04.07.2007**
(21) Numéro de dépôt: 06027075.8
(22) Date de dépôt: 29.12.2006
(51) Int. Cl.: H03K 3/012, G08B 19/00

(54) **Procédé et dispositif de commande avec filtrage d'aléas**

(30) Priorité: 29.12.2005 FR 0513509
(71) Demandeur: Chanussot, Jean, 13260 Cassis (FR)
(72) Inventeur: Chanussot, Jean, 13260 Cassis (FR)
(74) Mandataire: Renaud-Goud, Thierry

(57) **Abrégé**

L'invention concerne un dispositif de commande recevant un premier signal de détection d'un premier capteur, comprenant un premier organe de temporisation qui produit un signal de filtrage après une période de présence faisant suite à l'apparition de ce premier signal de détection, comprenant aussi un premier opérateur logique pour produire un signal de présence en cas de présence simultanée du premier signal de détection et du signal de filtrage.

Il comprend de plus des moyens pour réinitialiser le premier organe de temporisation à la disparition du premier signal de détection.

## Description

La présente Invention concerne un procédé et un dispositif de commande avec filtrage d'aléas.

Le domaine de l'invention est celui du pilotage des Installations électriques figurant dans des lieux ouverts au public. Il s'agit par exemple de commander l'ouverture d'une porte, de diffuser un enregistrement sonore, de visualiser une séquence vidéo, d'allumer une lampe, d'enclencher un système de ventilation, de chauffage ou de climatisation...

On prendra pour exemple le cas d'un musée comprenant plusieurs salles successives séparées par des couloirs d'accès. Généralement, pendant la période d'ouverture au public, toutes les salles sont éclairées. Il apparaît ainsi qu'en cas de faible fréquentation, lorsqu'une salle est dépourvue de visiteurs, son éclairage est inutile.

Pour remédier à cet état de fait on peut prévoir d'allumer cette salle sous certaines conditions en observant le comportement le plus courant d'un quelconque visiteur. Celui-ci progresse dans le musée en suivant le sens de la visite et l'on peut donc prédire que lorsqu'il est dans une salle donnée, il va très probablement se diriger vers la salle suivante.

Ainsi, en disposant judicieusement un capteur tel qu'un détecteur de présence dans une salle quelconque, on peut commander l'éclairage de la salle suivante.

Il convient en premier lieu d'éviter un éclairage Intempestif de la salle suivante suite à un signal de détection très bref produit par le détecteur de présence, ce signal issu d'un aléa ne reflétant pas la présence d'un visiteur. Une solution consiste à enclencher un organe de temporisation à l'apparition du signal de détection et à vérifier que ce signal est toujours présent lorsque la durée de temporisation est écoulée. Cet agencement apporte une amélioration sensible mais il commande tout de même l'éclairage si deux aléas sont séparés dans le temps par une durée équivalente à celle de la durée de temporisation.

Un premier objet de la présente Invention est ainsi de sécuriser une commande issue d'un capteur.

Selon l'invention, un dispositif de commande qui reçoit un premier signai de détection d'un premier capteur comprend un premier organe de temporisation qui produit un signal de filtrage après une période de présence faisant suite à l'apparition de ce premier signal de détection, ce dispositif comprenant aussi un premier opérateur logique pour produire un signal de présence en cas de présence simultanée du premier signal de détection et du signal de filtrage ; de plus, ce dispositif comprend des moyens pour réinitialiser le premier organe de temporisation à la disparition du premier signal de détection.

Il vient que le signal de présence est produit uniquement si le signal de détection est continuellement présent pendant une période correspondant à la durée de temporisation du premier organe.

Par ailleurs, il n'est pas souhaitable d'éclairer la salle qui suit celle dans laquelle se trouve le visiteur au moment où le détecteur de présence l'identifie. Le visiteur ne peut pas être simultanément dans les deux salles en cause.

Un deuxième objet de la présente invention est donc de prendre en compte ce phénomène.

Selon l'invention, le dispositif comprend de plus un deuxième organe de temporisation pour produire un signal d'attente après une période d'attente faisant suite à l'apparition du signal de présence.

On remarque d'autre part que le visiteur ne séjourne pas Indéfiniment dans une salle donnée.

Ainsi, le dispositif comprend de plus un troisième organe de temporisation qui produit un signal de commande pendant une période de commande en réponse au signal d'attente.

La disparition du signal de commande peut ainsi être utilisé pour éteindre la salle.

Il faut par ailleurs envisager le cas où l'éclairage n'aurait pas été commandé par l'intermédiaire du premier capteur ou, quand bien même l'aurait-il été, le cas où la période de commande est révolue alors que la salle n'est pas encore vide.

Ainsi, le dispositif recevant un deuxième signal de détection d'un deuxième capteur, il comprend de plus un deuxième opérateur logique pour produire un signal d'activation en cas de présence du deuxième signal de détection ou du signal d'attente.

Là encore, le dispositif comprend de plus un troisième organe de temporisation qui produit un signal de commande pendant une période de commande en réponse au signal d'activation.

L'invention vise également un procédé pour la mise en oeuvre des fonctions réalisées par le dispositif ci-dessus.

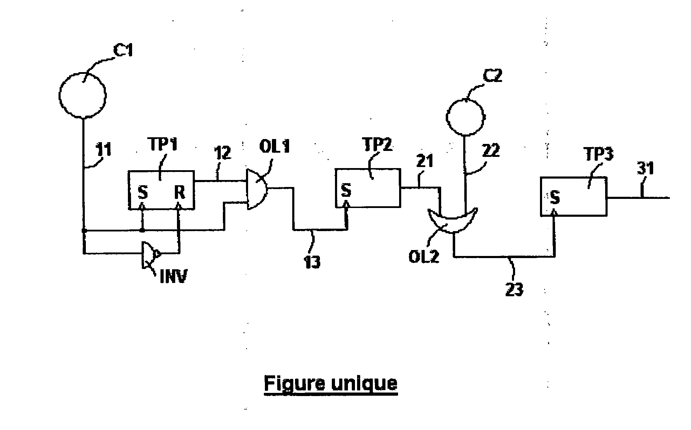

La présente Invention apparaîtra maintenant avec plus de détails dans le cadre de la description qui suit d'un exemple de réalisation donné à titre illustratif en se référant à l'unique figure annexée qui représente une vue schématique du dispositif.

En référence à la figure, un premier capteur C1 tel qu'un détecteur de présence délivre un premier signal de détection 11 lorsqu'il est sollicité.

Un premier organe de temporisation TP1 est pourvu d'une entrée d'enclenchement S et d'une entrée de réinitialisation R. Il produit un signal de filtrage 12 après une période d'attente faisant suite à l'apparition d'un signal sur son entrée d'enclenchement, le premier signal de détection 11 en l'occurrence. Cet organe TP1 est réinitialisé à l'apparition d'un signal sur son entrée de réinitialisation, le signal complémentaire du premier signal de détection 11 en l'occurrence qui est obtenu par exemple au moyen d'un Inverseur. La réinitialisation consiste à remettre cet organe dans l'état dans lequel il était avant son enclenchement.

Un premier opérateur logique OL1 produit un signal de présence 13 en cas de présence simultanée du premier signal de détection et du signal de filtrage 12. Il s'agit par exemple d'une porte ET. Le signal de présence 13 indique donc que le premier capteur C1 a été sollicité continuellement pendant une durée au moins égale à la période de présence. Un deuxième organe de temporisation TP2 analogue au premier TP1 produit un signal d'attente 21 après une période d'attente faisant suite à l'apparition du signal de présence 13 sur son entrée d'enclenchement. C'est ce signal d'attente qui peut être exploité pour commander l'éclairage de la salle qui suit celle où se trouve placé le premier capteur C1 ; Une fois que la salle a été allumée, il faut envisager de l'éteindre et pour ce faire on peut prendre en compte le temps au-delà duquel Il est peut probable que le visiteur séjourne dans la salle.

Ainsi, un troisième organe de temporisation OP3 produit un signal de commande pendant une période de commande dès l'apparition du signal d'attente 21 sur son entrée d'enclenchement.

Jusqu'à présent, on a envisagé le cas le plus courant du visiteur qui suit la progression recommandée par le musée. Il se peut cependant que pour une quelconque raison le visiteur se trouve dans une salle sans avoir activé le capteur qui se trouvait dans la salle qui précède selon l'ordre de la visite, auquel cas il se trouverait privé de lumière.

Pour éviter cette situation, un deuxième capteur C2 est dans la salle qu'il convient d'éclairer. Ce deuxième capteur produit un deuxième signal de détection 22 et, maintenant, ce n'est plus le signal d'attente 21 qui enclenche le troisième organe de temporisation TP3 mais un signal d'activation 23. Ce signal d'activation est produit par un deuxième opérateur logique OL2 lorsque l'un ou l'autre du signal d'attente 21 et du deuxième signal de détection 22 sont présents.

Naturellement, le deuxième capteur C2 peut tout comme le premier C1, être suivi de son propre organe de temporisation destiné à supprimer des détections intempestives.

A titre d'exemple, les valeurs suivantes peuvent être retenues :
- période de présence : 3 secondes,
- période d'attente: 20 secondes,
- période de commande : 5 minutes.

L'invention a été présentée jusqu'à présent comme résultant d'un assemblage de composants électroniques, voire même électromécaniques. Il va sans dire qu'à l'heure actuelle il existe d'autres moyens de mise en oeuvre de cette invention. On pense en premier lieu aux solutions informatiques, notamment à celles faisant appel à un automate programmable. Dans ce cas, le procédé mis en oeuvre pour un tel équipement reproduit à l'identique les fonctions assurées par le dispositif ci-dessus. C'est pour cette raison que le terme de signal doit s'entendre dans son sens le plus large possible : il recouvre notamment une valeur de tension ou de courant mais également une représentation numérique de cette valeur mémorisée de quelque manière que ce soit.

L'invention concerne essentiellement la mise en service d'un équipement tel qu'un système d'éclairage, bien qu'elle donne quelques indications sur la manière de mettre cet équipement hors service. Il s'ensuit que le terme de commande doit lui aussi s'entendre dans un sens général, à savoir qu'il concerne aussi bien une commande de mise en service qu'une commande de mise hors service.

L'exemple de réalisation de l'invention présenté ci-dessus a été choisi eu égard à son caractère concret. Il ne serait cependant pas possible de répertorier de manière exhaustive tous les modes de réalisation que recouvre cette invention. En particulier, tout moyen ou toute étape décrit peut être remplacé par un moyen ou une étape équivalent sans sortir du cadre de la présente invention.

## Revendications

1. Dispositif de commande recevant un premier signal de détection 11 d'un premier capteur C1, comprenant un premier organe de temporisation TP1 qui produit un signal de filtrage 12 après une période de présence faisant suite à l'apparition de ce premier signal de détection 11, comprenant aussi un premier opérateur logique OL1 pour produire un signal de présence 13 en cas de présence simultanée du premier signal de détection 11 et du signal de filtrage 12,
**caractérisé en ce qu'**il comprend de plus des moyens INV pour réinitialiser ledit premier organe de temporisation TP1 à la disparition dudit premier signal de détection 11.

2. Dispositif selon la revendication 1, **caractérisé en ce qu'**il comprend de plus un deuxième organe de temporisation TP2 pour produire un signal d'attente 21 après une période d'attente faisant suite à l'apparition dudit signal de présence 13.

3. Dispositif selon la revendication 2, **caractérisé en ce qu'**il comprend de plus un troisième organe de temporisation qui produit un signal de commande 31 pendant une période de commande en réponse audit signal d'attente 21.

4. Dispositif selon la revendication 2, **caractérisé en ce que**, recevant un deuxième signal de détection 22 d'un deuxième capteur C2, il comprend de plus un deuxième opérateur logique OL2 pour produire un signal d'activation 23 en cas de présence dudit deuxième signal de détection 22 ou dudit signal d'attente 21.

5. Dispositif selon la revendication 4, **caractérisé en ce qu'**il comprend de plus un troisième organe de temporisation TP3 qui produit un signal de commande 31 pendant une période de commande en réponse audit signal d'activation 23.

6. Procédé pour la mise en oeuvre d'un dispositif conforme à l'une quelconque des revendications précédentes.
